(19) Europäisches Patentamt
European Patent Office
Office européen des brevets

(11) EP 3 234 061 B1

(12) **FASCICULE DE BREVET EUROPEEN**

(45) Date de publication et mention de la délivrance du brevet:
**27.05.2020 Bulletin 2020/22**

(21) Numéro de dépôt: **14827251.1**

(22) Date de dépôt: **15.12.2014**

(51) Int Cl.:
***C09K 8/035*** *(2006.01)* ***C09K 8/528*** *(2006.01)*
***C09K 8/532*** *(2006.01)* ***B01J 13/00*** *(2006.01)*

(86) Numéro de dépôt international:
**PCT/FR2014/053342**

(87) Numéro de publication internationale:
**WO 2016/097492 (23.06.2016 Gazette 2016/25)**

(54) **NANO-INHIBITEURS**

NANO-INHIBITOREN

NANO-INHIBITORS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**25.10.2017 Bulletin 2017/43**

(73) Titulaires:
- **Total SA**
  **92400 Courbevoie (FR)**
- **Université Claude Bernard Lyon 1**
  **69100 Villeurbanne (FR)**
- **Centre National de la Recherche Scientifique (C.N.R.S.)**
  **75016 Paris (FR)**

(72) Inventeurs:
- **HURTEVENT, Christian**
  **46310 Saint Chamarand (FR)**
- **BARAKA-LOKMANE, Salima**
  **F-64000 Pau (FR)**
- **ORDONEZ-VARELA, John-Richard**
  **64230 Lescar (FR)**
- **TILLEMENT, Olivier**
  **F-69270 Fontaines Saint-Martin (FR)**
- **MARAIS, Arthur**
  **F-56650 Lochrist (FR)**
- **MOUSSARON, Albert**
  **54140 Jarville La Malgrange (FR)**

(74) Mandataire: **Plasseraud IP**
**235 Cours Lafayette**
**69006 Lyon (FR)**

(56) Documents cités:
**WO-A2-2011/135101** **FR-A1- 2 881 787**
**FR-A1- 2 976 825** **US-A1- 2012 015 852**

- **KAN A T ET AL: "Adsorption and precipitation of an aminoalkylphosphonate onto calcite", JOURNAL OF COLLOID AND INTERFACE SCIENCE, ACADEMIC PRESS, NEW YORK, NY, US, vol. 281, no. 2, 15 janvier 2005 (2005-01-15), pages 275-284, XP004660469, ISSN: 0021-9797, DOI: 10.1016/J.JCIS.2004.08.054 cité dans la demande**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 234 061 B1

Printed by Jouve, 75001 PARIS (FR)

## Description

### Domaine technique

L'invention concerne une nouvelle formulation avec nanoparticules d'inhibiteurs de dépôts minéraux. Ces solutions d'inhibiteurs sont employées pour empêcher ou du moins ralentir la formation de dépôts de minéraux dans un puits lors de l'extraction de gaz ou de pétrole, en particuliers les dépôts de sulfures, sulfates ou carbonates métalliques.

L'invention vise également leur procédé d'obtention ainsi que leurs applications.

### Arrière-plan technologique

Lors de l'exploitation de champs pétroliers ou gaziers, la récupération de pétrole peut être améliorée par l'injection d'eau au sein du gisement exploité ceci via un puits d'injection et de manière à pousser le pétrole du gisement hors du sous-sol, par au moins un autre puits appelé puits de production. L'interaction de l'eau injectée avec le réservoir contenant le gaz, le pétrole et des eaux souterraines peut résulter en la formation d'espèces chimiques susceptibles d'entraîner des défauts de fonctionnement des installations. Des dépôts de sulfate de baryum sont tout particulièrement à craindre. D'autres types de dépôts par exemple de carbonate de calcium ou de sulfures de zinc et de plomb, peuvent se former aussi bien en présence d'eau d'injection qu'en son absence. Ces derniers sont notamment susceptibles de se former dans des conditions d'exploitation à haute pression et haute température ou lors de la mise en contact de la saumure injectée pour extraire le pétrole ou le gaz avec le sulfure d'hydrogène ou les ions contenus dans le réservoir. La production d'eau de réservoir ou d'aquifère simultanément avec le pétrole ou le gaz peut entrainer les mêmes phénomènes. Ces dépôts minéraux sont susceptibles d'obstruer les canaux d'écoulement dans la formation, de polluer les canalisations et les équipements de surface et de bloquer les systèmes de pompage et les vannes de sécurité. Plus généralement, des dépôts minéraux ou des phénomènes de corrosion peuvent apparaître dans différentes conditions d'exploitation.

Une solution couramment employée pour l'élimination de ces dépôts minéraux a consisté à effectuer des lavages acides répétés. Outre le problème de leur courte durée d'action, ces traitements ne sont pas sans risques pour les équipements comme pour les hommes, en particulier dans des conditions de haute pression et haute température.

Pour remédier à ce problème, il est possible d'inhiber la formation de ces dépôts par injection continue d'inhibiteurs en fond de puits quand des installations sont en place. La technique d'injection dite en « squeeze » constitue une alternative à l'injection continue.

Celle-ci consiste en l'injection d'une grande quantité de produit dans le réservoir pétrolier alors que la production est arrêtée. L'inhibiteur de dépôt une fois injecté au sein du réservoir doit s'adsorber sur la roche pour être par la suite relargué progressivement lors de la remise en production, ceci afin d'empêcher la formation des dépôts sur une longue période de temps, pendant la production de l'eau de réservoir.

Les inhibiteurs moléculaires de dépôts minéraux classiquement utilisés dans l'art antérieur en injection « squeeze » incluent les phosphonates, les polymères de vinylsulfonate (PVS), les acides polycarboxyliques sulfonatés (SPCA) ainsi que les acides polyphosphinocarboxylique (PPCA) éventuellement sulfonatés (Kan et al. 2005, Journal of Colloid and Interface Science 281 :275-284). Ces inhibiteurs sont cependant considérés comme étant peu thermostables, et certains, tels que les phosphonates sont gênants d'utilisation du fait des risques pour l'environnement qu'ils présentent. Il a toutefois été observé que les inhibiteurs de dépôts minéraux classiques n'étaient pas efficaces pour une utilisation dans des conditions de haute pression et haute température. Il a en outre été noté que les inhibiteurs polymériques ne sont pas ou peu efficaces pour une utilisation en injection « squeeze ». Le document FR2881787 A1 divulgue des nanoparticules comprenant un polymère cationique servant de matrice, dans lequel est compris un inhibiteur polymérique de dépôts, en particulier des polymères anionique de masse moléculaire comprise entre 0.4 et 20 kDa choisi parmi, entre autre, les polyphosphates, les polyphosphonates ou les acides phosphinocarboxyliques.

Chao et al (2013, OTC 24252) ont suggéré l'utilisation d'une formulation d'agents inhibiteurs de type acides polycarboxyliques sulfonatés (SPCA) couplés avec des nanoparticules d'alumines pour des injections en « squeeze ». Zhang et al (2010, SPE 130639) ont quant à eux également décrit des nanoparticules à base de silice comprenant l'association Zinc-phosphonates. Ghorbani et al (2012, SPE 156200) ont par ailleurs décrit l'utilisation d'acide polyphosphinocarboxylique (PPCA) sur une nanoparticule à base de carbone. La synthèse de ces nanoparticules est cependant délicate à mettre en œuvre et couteuse, chaque nanoparticule ne contenant que peu d'inhibiteur par rapport aux éléments structurant les nanoparticules proposées dans l'art antérieur.

Il subsiste donc le besoin de disposer d'un composé permettant d'inhiber ou de ralentir la formation de dépôts de minéraux ou de sulfures, qui soit stable à haute température et haute pression et/ou qui puisse être efficace pour une injection en squeeze. Il serait en outre souhaitable que ce composé puisse être libéré de manière prolongée, et qu'il soit simple à produire et/ou peu couteux. Enfin, il serait avantageux que ces composés soit rapidement biodégradables et peu toxiques pour l'environnement.

Les inventeurs ont démontré que ces besoins pouvaient être satisfaits en utilisant de nouvelles nanoparticules comprenant

(i) une matrice de polyorganosiloxane (POS); éventuellement en enrobage d'un cœur en oxyde de lanthanide, et
(ii) au moins un inhibiteur polymérique de dépôts.

**RESUME DE L'INVENTION**

La présente invention a pour objet des nanoparticules telles que définies dans la revendication 1.
L'invention a également pour objet un procédé d'obtention de ces nanoparticules, tel que défini dans la revendication 10, et leurs utilisations pour inhiber ou ralentir la formation de dépôts minéraux ou soufrés dans un puits lors de l'extraction de pétrole ou de gaz, telles que définies dans la revendication 13.
De façon avantageuse, les inventeurs ont en effet montré que les nanoparticules selon la présente invention, aussi appelées ci-après « Nano-inhibiteurs », ont une efficacité au moins comparable aux inhibiteurs moléculaires conventionnelles, mais présentent une résistance remarquable à la dégradation à haute température. De plus, leur taille inférieure au micron et leur nature hydrophile permet d'envisager une interaction efficace avec la roche pour une utilisation en « squeeze », notamment dans des conditions de haute température et/ou haute pression.

**DESCRIPTION DETAILLEE DE MODES DE REALISATION**

Les nanoparticules selon la présente invention, ou « Nano-inhibiteurs » sont caractérisées en ce qu'elles comprennent chacune

(i) une matrice de polyorganosiloxane (POS); éventuellement en enrobage d'un cœur en oxyde de lanthanide,
(ii) un enrobage à base essentiellement d'inhibiteurs polymériques de dépôts minéraux ou de dépôts soufrés lors de l'extraction de gaz ou de pétrole,

ledit inhibiteur polymérique de dépôts minéraux étant choisi parmi des polymères ou copolymères contenant au moins une des fonctions suivantes :

- les polyacides carboxyliques,
- les polymères d'acide sulfonique,
- les phosphates ou phosphonates,
- les acides polyphosphinocarboxyliques,
- des fonctions amides, et

ledit inhibiteur polymérique de dépôt soufrés étant un copolymère constitué uniquement d'unités comprenant un motif acide styrène sulfonique, éventuellement neutralisé, et d'unités renfermant un motif acide (poly)carboxylique éventuellement neutralisé ou au moins un motif (poly)amido-amine.
Ces Nano-inhibiteurs sont aptes à inhiber ou ralentir la formation de dépôts minéraux lors de l'extraction de gaz ou de pétrole, du fait de la présence d'au moins un inhibiteur polymérique de dépôts en leur sein, associés à la matrice de polyorganosiloxane, de préférence par des liaisons non covalentes. La structure des nanoparticules selon l'invention, ou Nano-inhibiteurs, est ainsi constituée d'une partie centrale ou noyau, essentiellement à base de polyorganosiloxane et, le cas échéant, comprenant un cœur en oxyde de lanthanide, et d'un enrobage du noyau, formé essentiellement d'inhibiteurs polymériques de dépôts, relié au noyau de préférence par des interactions non-covalentes, notamment des interactions électrostatiques.
Dans un mode de réalisation préféré, la masse des inhibiteurs de dépôts représente plus de 80% de la masse totale de chaque nanoparticule, de préférence plus de 90%, voire plus de 95%, 96%, 97%, 98% et même plus de 99%.

*Le noyau à base de polyorganosiloxanes*

Le noyau à base de polyorganosiloxane (POS) peut être synthétisé selon les techniques de synthèse classiques connues de l'homme du métier. La voie dite « sol-gel » est par exemple couramment employée pour de telles structures. Dans un mode particulier de réalisation, le noyau est une nanoparticule hybride de type cœur/coquille, avec un cœur d'oxyde de lanthanide autour duquel est généré un enrobage de polyorganosiloxane. Dans un mode de réalisation spécifique, le cœur de nanoparticules à base d'oxydes de lanthanide est entièrement dissout et la nanoparticule ne présente plus de cristaux d'oxydes de lanthanide, comme décrit par exemple dans la demande WO2011/135101.
Au sens de l'invention, les lanthanides sont les métaux de terres rares choisis parmi la série des éléments de

numéros 57 (lanthane) à 71 (lutétium). On ajoutera à cette liste, l'yttrium, qui n'est pas réellement considéré comme un lanthanide mais qui est une terre rare de chimie comparable, rendant cet élément également utilisable dans le cadre de la présente invention. Dans un mode de réalisation préféré, on utilisera l'oxyde de gadolinium. La matrice à base de polyorganosiloxane composant le noyau est formée quant à elle majoritairement de composés comprenant les éléments Si, C, H, O et N, base des silicones. La matrice de polyorganosiloxane peut être avantageusement fonctionnalisée par des groupements -R, de préférence par covalence à base de liaison silanes Si-R en surface et issus de composés hydrophiles choisis parmi les dérivés d'amines, en particulier dans le groupe constitué par: aminopropyl, N-(2-aminoethyl-3-aminopropyl ; Bis(2-hydroxyethyl)-3-Aminopropyl ; N-propyl-N, N, N-trimethylamonium ; N-Propul-N, N, N-tri-n-butyl ammonium ; 11-amino-undecyl, N-(2-aminoethyl)-11amino-undecyl.

Dans un mode de réalisation préféré, la matrice de polyorganosiloxane comprend des fonctions à charges positives, et de préférence des fonctions amines libres. Dans un mode préféré de réalisation, la matrice de polyorganosiloxane comprend un rapport mol/mol [groupement amine libre]/ [atome de silice] d'au moins 10% et de préférence d'au moins 30%. Les fonctions amines ou plus généralement, les fonctions à charge positive, présentent dans le noyau de la nanoparticule permettent l'interaction du noyau avec les inhibiteurs polymériques de dépôts, en général de charge négative.

Dans un autre mode de réalisation, le noyau à base de polyorganosiloxane est généré directement à partir de noyaux de polysiloxanes, par exemple, issus de 3-Aminopropyl)triethoxysilane (APTES) et d'orthosilicate de tétraétyhle (TEOS) comme décrit en Exemple. En particulier, au moins 10% d'APTES est mis à réagir avec du TEOS pour former le noyau à base de polyorganosiloxane.

En général, l'ensemble cœur + matrice de polyorganosiloxane qui forment le noyau des Nano-inhibiteurs n'excède pas un diamètre moyen en volume de 10nm, de préférence le diamètre moyen est inférieur à 5nm pour l'ensemble cœur + matrice de polyorganosiloxane.

La distribution de taille des nanoparticules est par exemple mesurée à l'aide d'un granulomètre commercial, tel qu'un granulomètre Malvern Zêta sizer Nano-S basé sur la PCS (Photon Correlation Spectroscopy). Cette distribution est caractérisée par un diamètre moyen et un indice de polydispersité.

Au sens de l'invention, par « diamètre moyen », on entend la moyenne harmonique des diamètres des particules. L'indice de polydispersité fait référence à la largeur de la distribution en taille dérivant de l'analyse des cumulants. Ces deux caractéristiques sont décrites dans la norme ISO 13321 :1996.

Dans un autre mode de réalisation, le noyau à base de polyorganosiloxane est constitué essentiellement de polyorganosiloxanes, et le cas échéant d'oxyde de gadolinium. En particulier, dans un mode plus spécifique, le noyau est exempt d'alumines, de zircones, d'aluminates, d'aluminophosphates et/ou d'oxydes métalliques.

*L'enrobage du noyau composé d'inhibiteurs polymériques de dépôts*

Les Nano-inhibiteurs selon l'invention sont caractérisées en ce qu'ils comprennent un enrobage à base essentiellement d'inhibiteurs polymériques de dépôts minéraux ou de dépôts soufrés. Ces inhibiteurs présentent de préférence des charges négatives qui permettent une interaction stable par des liaisons non covalentes au noyau de la nanoparticule comprenant la matrice de polyorganosiloxanes, qui elle, est chargée positivement dans les conditions normales d'utilisation.

Par "inhibiteur de dépôts minéraux", on entend un composé capable d'empêcher ou de ralentir la formation (c'est-à-dire la nucléation et/ou la croissance) de cristaux de sels minéraux choisis notamment parmi : le carbonate de calcium, le sulfate de calcium, le sulfate de baryum, le sulfate de strontium, les sulfures de zinc, de plomb et de fer et leurs mélanges.

Les inhibiteurs de dépôts minéraux utilisables selon l'invention sont choisis parmi des polymères ou copolymères contenant au moins une des fonctions suivantes :

- les polyacides carboxyliques,
- les polymères d'acide sulfonique,
- les phosphates ou phosphonates,
- les acides polyphosphinocarboxyliques,
- des fonctions amides.

Ils sont encore plus spécifiquement choisis parmi :

- les polyphosphates, tels que le tripolyphosphate de sodium (STPP), l'hexamétaphosphate de sodium (SHMP),
- les organophosphonates, tels que l'acide amino tri(méthylène phosphonique) ou AMP, l'acide 1-hydroxyéthylidène-1,1-diphosphonique ou HEDP, l'acide éthylènediamine tétra(méthylène phosphonique) ou EDTMP, l'acide hexaméthylènediamine tétra(méthylène phosphonique) ou HMTMP, l'acide diéthylènetriamine penta(méthylène phosphonique) ou DETMP, l'acide hydroxyéthylamino-di(méthylènephosphonique) (HEMPA),

- les polyacides carboxyliques tels que l'acide 2-phosphonobutane 1,2,4-tricarboxylique ou PBTC, le poly(acide acrylique) ou PAA, le poly(acide méthacrylique) ou PMAA, le poly(acide maléique) ou PMA,
- les polymères à fonction acide sulfonique, tels que les copolymères d'acide styrène sulfonique et d'acide (poly)carboxylique, en particulier les copolymères d'acide styrène sulfonique et d'acide maléique, les copolymères d'acide styrène sulfonique et de (poly)amido-amine, les homo- et copolymères de vinylsulfonate, en particulier les copolymères de vinylsulfonate, de styrène et d'anhydride maléique, les alkyldiphényléther sulfonates et les copolymères d'acide acrylamidométhylpropane sulfonique (AMPS), d'acide maléique et d'acide acrylique,
- l'acide polyphosphinocarboxylique (PPCA) éventuellement sulfonaté.

Par "inhibiteur de dépôts soufrés", on entend un composé capable de réduire ou ralentir la formation de dépôt de sulfure.

Un inhibiteur polymérique de dépôt soufrés est un copolymère constitué uniquement d'unités comprenant (et de préférence constituées par) un motif acide styrène sulfonique éventuellement neutralisé et d'unités renfermant (et de préférence constituées par) un motif acide (poly)carboxylique éventuellement neutralisé ou au moins un motif (poly)amido-amine. Par "motif acide (poly)carboxylique", on entend un motif portant une ou plusieurs fonctions acides carboxyliques. Ce motif est avantageusement obtenu à partir d'un monomère insaturé portant au moins une, et de préférence deux, fonctions acides carboxyliques, choisi par exemple parmi l'acide maléique, l'acide fumarique, l'acide itaconique, l'acide citraconique, l'anhydride cis-1,2,3,6-tétrahydro-phthalique, l'acide maléique étant préféré. Ces motifs acides carboxyliques peuvent être neutralisés à l'aide de sels de sodium, de potassium ou d'ammonium, de préférence de sels de sodium. Le motif (poly)amido-amine peut être obtenu par réaction de tout ou partie des fonctions acides carboxyliques avec un composé, de préférence un polymère, portant au moins deux fonctions amines primaires ou secondaires, qui peut être choisi notamment parmi : les polyamines telles que la DETA (diéthylène triamine), la TETA (triéthylène tétramine), la TEPA (tétraéthylène pentamine), la dihexylène triamine et la polyéthylèneimine (PEI) ; les polymères siliconés, en particulier les polydiméthylsiloxanes, fonctionnalisés par des groupements amines ; les chitosans ; les polypeptides et protéines, de préférence la DETA et la PEI.

Dans un mode de réalisation plus spécifique, le pourcentage molaire, dans le copolymère selon l'invention, d'unités renfermant un motif acide styrène sulfonique éventuellement neutralisé soit compris entre 10 et 90%, de préférence entre 25 et 75% et, mieux, entre 50 et 70%.Ce copolymère peut renfermer au moins une autre unité chimiquement distincte de celles précitées et qui peut par exemple représenter au plus 20% mol et de préférence au plus 10% mol, par rapport au nombre de moles totales d'unités monomères dans ledit copolymère. Cette autre unité peut être choisie notamment parmi les (méth)acrylamides, les esters d'acide (méth)acrylique, l'acétate de vinyle, le styrène et le vinyltoluène.

Dans un autre mode de réalisation spécifique, l'inhibiteur polymérique utilisé dans les nanoparticules selon l'invention répond avantageusement à la formule suivante :

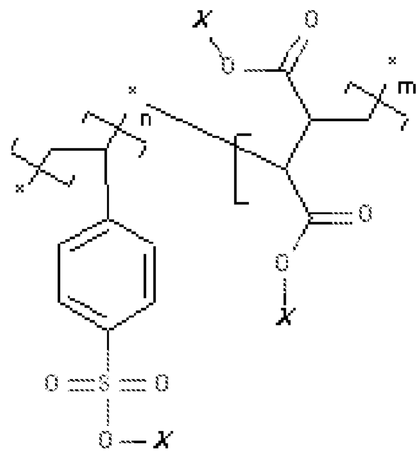

X = Na ou H

où m/(m+n) = 0,1-0,9 et n/(m+n) = 0,9-0,1, de préférence m/(m+n) = 0,25-0,75 et n/(m+n) = 0,75-0,25, et plus préférentiellement m/(m+n) = 0,3-0,5 et n/(m+n) = 0,5-0,7.

Selon une forme d'exécution plus spécifique de l'invention, tout ou partie des fonctions acides carboxyliques du copolymère sont substituées par des fonctions amido-amines résultant, comme indiqué précédemment, de la réaction de ces fonctions acides carboxyliques avec au moins deux fonctions amines primaires ou secondaires portées par un composé qui est mis à réagir avec les unités renfermant au moins un motif acide (poly)carboxylique du copolymère. Il a en effet été observé que ces copolymères présentaient des propriétés améliorées d'inhibition de la formation de dépôts sulfures. On pense que ces copolymères permettent d'obtenir un effet inhibiteur prolongé, par hydrolyse progressive des fonctions amides, mais également une action plus efficace, dans la mesure où le doublet libre de l'atome d'azote des fonctions amines n'ayant pas participé aux liaisons amides est utile pour complexer les sites de surface des particules de sulfure de zinc et de plomb. Ces copolymères à fonctions amido-amines limitent également les interactions entre les unités acides (poly)carboxyliques et des dépôts de sulfate de baryum ou de carbonate de calcium, par exemple, ce qui peut permettre d'éviter que le copolymère réagisse exclusivement avec ces dépôts qui ont tendance, dans certaines conditions, à se former avant les dépôts de sulfures.

Ce copolymère spécifique peut être obtenu suivant des procédés classiques de polymérisation radicalaire en voie aqueuse ou hydro-alcoolique et à pH acide. Il est également disponible dans le commerce auprès des sociétés ALDRICH ou AKZO NOBEL.

Dans un autre mode de réalisation spécifique, les Nanoinhibiteurs sont caractérisés en ce qu'ils comprennent un inhibiteur polymérique de dépôts choisi parmi les copolymères d'acide styrène sulfonique et d'acide (poly)carboxylique, en particulier les copolymères d'acide styrène sulfonique et d'acide maléique, et les copolymères d'acide styrène sulfonique et de (poly)amidoamine.

Dans un mode de réalisation spécifique, les Nano-inhibiteurs sont caractérisés en ce qu'ils comprennent un inhibiteur polymérique de dépôts d'une masse molaire d'au moins 10 kDa, de préférence supérieure à 20 kDa.

Typiquement, le diamètre moyen inférieur des Nano-inhibiteurs peut aller jusqu'à 2μm, par exemple compris entre 20 et 500nm, mais de préférence entre 20 et 200nm.

Outre les inhibiteurs polymériques de dépôt comme décrits ci-dessus, les Nanoinhibiteurs peuvent comprendre d'autres inhibiteurs de dépôts, et notamment des phosphonates.

*Procédé d'obtention des Nano-inhibiteurs*

L'invention concerne aussi un procédé d'obtention des Nano-inhibiteurs tels que décrits plus haut. Ce procédé est caractérisé en ce qu'il comprend les étapes suivantes :

a. éventuellement synthèse d'un cœur à base d'oxyde de lanthanide, par exemple un cœur d'oxyde de gadolinium,
b. enrobage des cœurs de l'étape (a) par du polyorganosiloxane (POS) ou préparation d'une nanoparticule de polyorganosiloxane, consistant essentiellement à mettre en œuvre une technique sol/gel d'hydrolyse-condensation d'espèces siliciques et d'alcoxysilanes, en présence d'une base ou d'un acide ;
c. surenrobage des nanoparticules obtenues à l'étape (b) consistant essentiellement à mettre en présence ces cœurs enrobés ou nanoparticules de polyorganosiloxane de l'étape (b) avec une solution d'inhibiteurs polymériques de dépôts en présence de préférence d'un solvant aqueux ou alcoolique, par exemple les polyéthers, notamment le polyéthylène glycol;
d. éventuellement purification des nanoparticules, de préférence par filtration tangentielle, dialyse et/ou par précipitation/ lavage ;
e. éventuellement dissolution des cœurs d'oxydes de lanthanides des nanoparticules de l'étape (b) ou surenrobées de l'étape (c) consistant essentiellement à les mettre en présence d'un agent modificateur du pH et/ou d'un chélatant apte à complexer tout ou partie des cations lanthanides, de sorte que le diamètre des nanoparticules sans le surenrobage est réduit à une valeur comprise entre 1 et 20 nm, de préférence entre 1 et 10 nm ;
f. les étapes (c), (d), et (e) pouvant être réalisées dans un ordre différent ou en même temps.

Dans un mode de réalisation spécifique, les étapes (a) et (b) consistent plus précisément à former une nanoparticule de type cœur-coquille avec un cœur d'oxyde de lanthanide (par exemple par voie polyol modifiée) et une coquille de polysiloxane (par exemple par voie sol/gel), cet objet a par exemple une taille inférieure à 10nm (voire inférieure à 5nm). Un cœur d'oxyde de lanthanide de taille inférieure à 10nm peut être élaboré comme décrit en exemple ou par un des procédés décrits dans les publications suivantes : P. Perriat et al, J. Coll Int. Sci. 2004, 273, 191 ; O. Tillement et al. J Am Chem Soc 2007, 129, 5076 et P. Perriat et al., J. Phys. Chem. C, 2009, 113, 4038. Ces cœurs peuvent être enrobés par une couche de polysiloxane en suivant par exemple un protocole décrit dans les publications suivantes : C. Louis et al., Chem Mat. 2005, 17, 1673 et O. Tillement et al., J. Am. Chem. Soc., 2007, 129, 5076.

A l'étape c), les nanoparticules obtenues à l'étape b) sont mises en présence d'une quantité suffisante d'une solution d'inhibiteurs polymériques de dépôts dans des conditions aptes à permettre l'enrobage (ou surenrobage) des nanoparticules avec les inhibiteurs polymériques de dépôts comme décrit en exemple. Un ajout à vitesse relativement

lente et bonne agitation est conseillé à ce niveau.

L'étape d), optionnelle, consiste à séparer les Nano-inhibiteurs des résidus de synthèse par exemple par une méthode de dialyse ou de filtration tangentielle, sur une membrane comportant des pores de taille adaptée.

L'étape e), également optionnelle, permet d'obtenir des nanoparticules pour lesquelles le cœur à base d'oxyde de lanthanide est détruit par dissolution (par exemple en modifiant le pH ou en apportant des molécules complexantes dans la solution, comme décrit dans la demande WO2011/135101).

*Produits dérivés des Nano-inhibiteurs*

L'invention a également pour objet

- une suspension de Nano-inhibiteurs tels que décrit plus haut,
- une suspension de Nano-inhibiteurs tels qu'obtenus par le procédé décrit ci-dessus,
- un liquide d'injection pour inhiber ou ralentir la formation de dépôts lors de l'exploitation de gaz ou de pétrole, comprenant des Nano-inhibiteurs tels que définis ci-dessus et/ou, des Nano-inhibiteurs tels qu'obtenus par le procédé décrit ci-dessus, et/ou la suspension de Nano-inhibiteurs susvisée.

*Applications*

Les Nano-inhibiteurs selon l'invention ou leurs produits dérivés sont utiles pour inhiber ou ralentir la formation de dépôts soufrés et/ou de minéraux lors de l'extraction de gaz ou de pétrole.

Du fait de leur bonne tenue thermique, les Nano-inhibiteurs ou leurs produits dérivés peuvent être utilisés en particulier dans des puits pétroliers fonctionnant à haute pression, c'est-à-dire à plus de 10 MPa, par exemple de 20 à 150 MPa, et à haute température, c'est-à-dire de 150 à 250°C, par exemple de 200 à 230°C.

Ils sont également particulièrement appropriés pour une utilisation sous la forme d'une injection desdites nanoparticules en squeeze.

Dans un mode de réalisation, l'invention vise une méthode pour inhiber ou ralentir la formation de dépôts minéraux ou de dépôts soufrés, lors de l'extraction de gaz ou de pétrole, ladite méthode comprenant l'injection, dans un puits de forage, une formation souterraine, ou un puits de pétrole ou de gaz, d'un fluide contenant lesdits Nano-inhibiteurs.

Les Nano-inhibiteurs peuvent être injectés dans le puits sous forme d'additif dans un fluide d'injection. Ce fluide peut renfermer de 5 à 100.000 ppm du Nano-inhibiteur décrit précédemment Pour des injections en continue, il est conseillé de choisir des teneurs de l'ordre de 10 à 1000 ppm, pour des injections périodiques, en particulier de type squeeze, il est conseillé d'utiliser des concentrations supérieurs à 1000 ppm.

En variante, les Nano-inhibiteurs décrits précédemment peuvent être injectés dans le puits en "squeeze", c'est-à-dire suivant un procédé consistant à rincer le puits à l'eau de mer, puis à injecter dans le puits un fluide contenant ce Nano-inhibiteur et à introduire à nouveau de l'eau de mer dans le puits pour disperser le polymère dans le réservoir et lui permettre de s'adsorber sur les formations rocheuses souterraines. Lors de ce traitement, les opérations d'extraction de pétrole sont interrompues et, lorsqu'elles seront reprises, l'inhibiteur polymérique sera libéré progressivement des formations rocheuses pour empêcher ou ralentir la formation des dépôts de sulfures. Dans cette variante, le fluide injecté peut renfermer de l'ordre de 10% en poids des Nano-inhibiteurs décrits ci-dessus.

Dans tous les cas, le fluide véhiculant les Nano-inhibiteurs peuvent en outre contenir d'autres additifs tels que des inhibiteurs de corrosion, des inhibiteurs de paraffines, des agents tensioactifs ou des agents démulsionnants, des agents dispersants, notamment des dispersants d'asphaltène, des agents moussants ou des agents anti-mousse, des agents biocides, des capteurs d'oxygène, des agents chélatants tels que l'EDTA et le DTPA, et leurs mélanges.

La présente invention sera mieux comprise à la lumière des exemples non limitatifs suivants, qui sont donnés à titre purement illustratif et n'ont pas pour but de limiter la portée de cette invention qui est définie par les revendications annexées.

**LEGENDES DES FIGURES**

**Figure 1** : La figure 1 est un schéma représentant le dispositif Blocking-test.

**Figure 2** : La figure 2 est un graphe représentant l'adsorption statique sur un échantillon de sable en fonction de la concentration initiale d'inhibiteur.

**Figure 3** : La figure 3 est un graphe représentant (A) l'intensité de phosphorescence et (B) la concentration, obtenue avec l'inhibiteur polymérique seul (carré) ou sous la forme de nanoinhibiteurs (rond) en fonction du volume injecté.

**Figure 4** : La figure 4 est un graphe représentant l'intensité de phosphorescence normalisée avec une formulation d'inhibiteur comportant des nanoparticules sans gadolinium (courbe du haut) et sans nanoparticules (courbe du bas) en sortie du dispositif de perméation simple.

**Figure 5 :** La figure 5 est un schéma représentant le principe des tests de perméation.

**Figure 6 :** La figure 6 est un graphe représentant la quantité d'inhibiteur mesurée en sortie du dispositif de perméation en fonction du volume injecté.

**Figure 7** : La figure 7 est un graphe représentant l'analyse par DLS de la taille des nanoparticules de silice sans gadolinium.

## EXEMPLES

**Exemple 1 : Préparation des petits cœurs en oxyde de gadolinium enrobés d'une couche de polysiloxane (ou PC4Si)**

Un colloïde de $Gd_2O_3$ est préparé dans un réacteur de 10 L thermostaté et équipé d'un agitateur mécanique par dissolution de 167,3 g de chlorure de gadolinium hexahydraté dans 3 L de diéthylène glycol. Le mélange est alors chauffé à 140 °C et agité à environ 300 rpm pendant 2 à 3 heures, jusqu'à dissolution complète des cristaux.

Une fois que tous les cristaux de chlorure de gadolinium sont dissous, est ajouté goutte à goutte 44,55 mL de solution NaOH 10M. Le mélange est laissé sous agitation à environ 250 rpm à 180°C pendant 5 heures. Ce même mélange est ensuite laissé à refroidir à température ambiante (20 à 30 °C) sous une agitation à 200 rpm pendant au moins 12 heures.

La mesure de la taille moyenne des cœurs est réalisée par granulométrie laser directement dans le DEG sans dilution. Le diamètre moyen en volume est de 1,5 $\pm$ 0,5 nm avec moins de 5% de particules au-delà de 5 nm.

Autour de ces particules, une couche de polysiloxane fonctionnalisée est synthétisée par voie sol-gel. Pour ce fait, deux solutions $S_1$ et $S_2$ sont préparées de la façon suivante :

Pour la solution $S_1$, un mélange homogénéisé d'APTES et de TEOS est préparé sous atmosphère inerte de la façon suivante : dans une bouteille de 2 L, mélanger 1,6 L de DEG, 51,42 mL de TEOS et 80,61 mL d'APTES mesurés à l'aide d'éprouvettes graduées de volume adapté.

Quant à la solution $S_2$, mélanger 190 mL de DEG; 43,1 mL d'eau ultra pure et 6,94 mL de triéthylamine (TEA) dans une bouteille de 250 mL. Le volume de DEG est mesuré avec une éprouvette graduée de volume adapté et les volumes de TEA et d'eau ultra pure sont prélevés grâce à une pipette Eppendorf de volume adapté. Homogénéiser la solution.

Le colloïde est ensuite chauffé à 40 °C sous agitation à 250 rpm. A 40°C, la totalité de la solution $S_1$ est ajoutée soit (1732 mL), ceci à l'aide d'une pompe péristaltique sur une durée de 96 h. Cela correspond à un débit de 300 $\mu$L/min. Une heure après le début de l'ajout de la solution $S_1$ 184,3 mL de $S_2$ est ajouté à l'aide d'une pompe péristaltique sur une durée de 96 h. Cela correspond à un débit de 32 $\mu$L/min.

Une fois les deux solutions ajoutées, la solution globale formée est maintenue sous agitation à environ 150 rpm à 40°C pendant 72 h.

La solution est ramenée à température ambiante (10 à 30°C) et laissée à reposer durant au minimum 12h.

A la fin de ces opérations, La mesure de la taille moyenne des particules est réalisée par granulométrie laser directement dans le DEG, sans dilution. Le diamètre moyen en volume est de 3,0 $\pm$ 1,0 nm avec moins de 5% de particules au-delà de 8 nm.

**Exemple 2 : Préparation d'une solution inhibitrice de sel de sodium de poly (acide 4-styrènesulfonique-co-acide maléique) (ou FI1)**

Le polymère FI1, acheté à Sigma Aldrich, (CAS : 68037-40-1 ; $[CH2CH(C6H4SO3R)]_x[CH(CO2R)CH(CO2R)]_y$, R=H ou Na), possède une masse molaire de l'ordre de 20 kDa. Le polymère présente un ratio de trois fonctions acide styrène sulfonique pour une fonction acide maléique.

Cent grammes de FI1 sont pesés dans un flacon de 1 L. 1 L d'eau ultra pure est ensuite ajouté et une agitation est maintenue jusqu'à dissolution totale.

**Exemple 3 : Préparation d'une solution de nano inhibiteurs de PC4Si et de sel de sodium de poly (acide 4-styrènesulfonique-co-acide maléique) (ou FI1-PC4Si)**

Dans un flacon de 100 mL est mis à réagir 50 mL de la solution de FI1, obtenue selon le protocole de l'exemple

2, avec 2,5 mL de la solution de PC4Si, obtenu selon l'exemple 1, et 47,5 mL de diéthylène glycol. Le tout est maintenu sous agitation laisser pendant 24h.

La mesure de la taille moyenne des particules est ensuite réalisée par granulométrie laser après dilution dix fois dans l'eau ultra pure. Le diamètre moyen en volume est de 55 nm ± 5,0 nm.

**Exemple 4 : Préparation des solutions de nano inhibiteurs de PC4Si et de sel de sodium de poly (acide 4-styrènesulfonique-co-acide maléique) (ou Fl1-PC4Si) à différentes concentrations en PC4Si**

Dans six flacons de 100 mL sont mis à réagir 50 mL de la solution de Fl1, obtenus selon l'exemple 2, avec respectivement, 0 mL, 0,1 mL, 0,5 mL, 1 mL, 5 mL et 10 mL de la solution de PC4Si obtenus selon l'exemple 1 et respectivement, 50 mL, 49,9 mL, 49,5 mL, 49 mL, 45 mL et 40 mL de diéthylène glycol et laisser agiter 24h.

La mesure des tailles moyenne des particules est réalisée par granulométrie laser après dilution par un facteur dix dans l'eau ultra pure. Les diamètres moyen en volume sont respectivement de 60 nm ± 10 nm, 65 nm ± 10 nm, 65 nm ± 10 nm, 15 nm ± 1 nm, 10 nm ± 1 nm et 1 nm ± 0,05 nm.

**Exemple 5 : Préparation d'une solution inhibitrice de polymère d'acide 1,3-Benzenedicarboxylique avec 2,2-diméthyl-1,3-propanediol, 2,5-furandione, acide hexanedioique, 1,3-isobenzofurandione, 2,2'-oxybis(éthanol) et 1,2-propanediol (IDOS 150 ou BelasolS50)**

Le polymère, nommé IDOS150 ou BelasolS50, est fourni par R.E.P. Recherche Exploitation Produits (CAS : 110152-61-9).

100 grammes d'IDOS150 sont pesés dans une fiole jaugée de 1 L. Le volume est ensuite ajusté à 1 L avec de l'eau ultra pure et la solution homogénéisée.

**Exemple 6 : Préparation des solutions inhibitrices d'IDOS150-PC4Si à différentes concentrations en PC4Si**

Dans quatre flacons de 100 mL sont mis à réagir 40 mL d'eau ultra pure, 5 mL de la solution d'IDOS150, obtenu selon l'exemple 5, avec respectivement, 0 mL, 0,05 mL, 0,1 mL et 0,25 mL de la solution de PC4Si obtenue selon l'exemple 1, et respectivement, 5 mL, 4,95 mL, 4,9 mL et 4,75 mL de diéthylène glycol. Les solutions sont ensuite placées sous agitation pendant 24h.

La mesure des tailles moyenne des particules est réalisée par granulométrie laser après dilution par un facteur dix dans l'eau ultra pure. Les diamètres moyen en volume sont respectivement de 450 nm ± 10 nm, 350 nm ± 10 nm, 400 nm ± 10 nm et 300 nm ± 10 nm.

**Exemple 7: Préparation d'une solution inhibitrice de terpolymère d'allyl sulfonate de sodium, d'anhydride maléique et d'acide 1-hydroxyethane 1,1-diphophosphonique (TP8106G)**

Le polymère, nommé TP8106G, est fourni par la société Clariant. 50 grammes de TP8106G sont pesés dans une fiole jaugée de 1 L. Le volume est ensuite ajusté à 1 L avec de l'eau ultra pure. La solution est homogénéisée.

**Exemple 8 : Préparation d'une solution de nano inhibiteurs de TP8106G-PC4Si**

Dans un flacon de 100 mL sont mis à réagir 50 mL de la solution de TP8106G, obtenu selon l'exemple 7, avec 0,5 mL de la solution de PC4Si, obtenue selon l'exemple 1, et 49,5 mL de diéthylène glycol et laisser sous agitation pendant 24h.

La mesure de la taille moyenne des particules est réalisée par granulométrie laser après dilution dix fois dans l'eau ultra pure. Le diamètre moyen en volume est de 30 nm ± 5,0 nm.

**Exemple 9 : Evaluation de l'effet inhibiteur de Zns par le Tube Blocking Test des formulations FL1 et FL1-PC4S**

***Evaluation avec le polymère FL1 seul***

Deux solutions salines contenant respectivement des cations métalliques (A1) et l'élément soufre (B1) sont mélangées en proportions égales (voir tableau 1 pour composition chimique des solutions). Le mélange passe ensuite dans un tube dans lequel un dépôt de sels métalliques est susceptible de se former). Le tube est muni d'un filtre sur lequel le dépôt s'installe en priorité rendant difficile la circulation du fluide. La formation d'un dépôt s'accompagne ainsi d'une augmentation de la pression différentielle entre les extrémités du tube. L'inhibiteur est introduit via la solution A1 auquel il est ajouté en concentration variables. Une analyse ultérieure du filtre par les techniques de SEM et EDX permet

d'obtenir des informations précises sur la quantité et la nature des dépôts formés.

Le dispositif utilisé est représenté à la Figure 1 annexée.

**Tableau 1 Composition des solutions utilisées pour le Tube Blocking Test**

| *ion* | *Solution A1 (mg/L)* | *Solution B1 (mg/L)* |
|---|---|---|
| Na | 63310 | 117576 |
| Ca | 37318 | 0 |
| Mg | 511 | 0 |
| K | 0 | 0 |
| Ba | 0 | 0 |
| Sr | 0 | 0 |
| $SO_4$ | 0 | 0 |
| Fe | 0 | 0 |
| Pb | 0 | 0 |
| Zn | 300 | 0 |
| S | 0 | 10 |

L'inhibiteur FL1 est ajouté à la solution A1 en quantités variables de manière à obtenir les concentrations du tableau 2 au sein du tube. Comme précisé précédemment ces solutions sont co-injectées avec la solution B1 (proportions 50/50 en volume) via un tube en alliage spécifique (Ni72Cr16Fr8) de 1 mm de diamètre extérieur et de 0.8 mm de diamètre intérieur. Une fois intimement mélangées les deux solutions passent au travers d'un filtre d'une porosité de 7 μm. Les solutions sont injectées avec un débit de 10 ml/min à elles deux. Une mesure de la pression différentielle existant de part et d'autre du filtre est effectuée sur une durée d'une heure. Les tests sont effectués à une température de 125°C et sous une pression de 45 bars. Les résultats obtenus sont rassemblés dans le Tableau 2 ci-dessous.

**Tableau 2 Résultats des Tubes blocking tests**

| *concentration effective dans le tube (mg/L)* | *augmentation de pression sur une heure (psi)* | *dépôts observés* |
|---|---|---|
| | | |
| filtre nu | N/A | aucun |
| | | |
| **FL1** | | |
| 0 | 3.3 | grande quantité de ZnS |
| 5 | 1.2 | faible quantité Zns |
| 10 | 1 | traces ZnS |
| 30 | 0 | trace ZnS |

***Evaluation avec le polymère FL1-PC4Si***

Deux solutions salines contenant respectivement des cations métalliques (A2) et l'élément soufre (B2) sont mélangées en proportions égales (voir tableau 3 pour composition chimique des solutions). Le mélange passe ensuite dans un tube dans lequel un dépôt de sels métalliques est susceptible de se former). Le tube est muni d'un filtre sur lequel le dépôt s'installe en priorité rendant difficile la circulation du fluide. La formation d'un dépôt s'accompagne ainsi d'une augmentation de la pression différentielle entre les extrémités du tube. L'inhibiteur est introduit via la solution A2 auquel il est ajouté en concentration variables. Une analyse ultérieure du filtre par les techniques de SEM et EDX permet d'obtenir des informations précises sur la quantité et la nature des dépôts formés.

**Tableau 3 Composition des solutions utilisées pour le Tube Blocking Test**

| *ion* | *Solution A2 (mg/L)* | *Solution B2 (mg/L)* |
|---|---|---|
| Na | 29505 | 29500 |
| Ca | 7223 | 0 |
| Mg | 511 | 0 |
| K | 0 | 0 |
| Ba | 0 | 0 |
| Sr | 0 | 0 |
| $SO_4$ | 0 | 0 |
| Fe | 0 | 0 |
| Pb | 0 | 0 |
| Zn | 200 | 300 |
| S | 0 | 10 |
| $HCO_3$ | 0 | 0 |
| Cl | 55.5 | 45.4 |

L'inhibiteur FL1-PC4Si est ajouté à la solution A2 en quantités variables de manière à obtenir les concentrations du tableau 2 au sein du tube. Comme précisé précédemment ces solutions sont co-injectées avec la solution B2 (proportions 50/50 en volume) via un tube en alliage spécifique (Ni72Cr16Fr8) de 1 mm de diamètre extérieur et de 0.8 mm de diamètre intérieur. Une fois intimement mélangées, les deux solutions passent au travers d'un filtre d'une porosité de 7 $\mu$m. Les solutions sont injectées avec un débit de 10 ml/min à elles deux. Une mesure de la pression différentielle existant de part et d'autre du filtre est effectuée sur une durée d'une heure. Les tests sont effectués à une température de 125°C et sous une pression de 45 bars. Les résultats obtenus sont rassemblés dans le Tableau 4 ci-dessous.

**Tableau 4 Résultats des Tubes blocking tests**

| *concentration effective dans le tube (mg/L)* | *augmentation de pression sur une heure (psi)* | *dépôts observés* |
|---|---|---|
| | | |
| filtre nu | N/A | aucun |
| | | |
| **FL1-PC4Si** | | |
| 0 | 1.6 | grande quantité de ZnS |
| 3 | 0.2 | faible quantité Zns |
| 5 | 0.2 | faible quantité Zns |
| 10 | 0.2 | trace ZnS |

Les résultats démontrent une efficacité qui apparait sensiblement égale en terme d'inhibition des deux formulations (avec et sans nanoparticules PC4Si).

**Exemple 10 : Evaluation du vieillissement thermique des solutions inhibitrices**

***Evaluation avec le polymère FL1 seul***

Un volume proche de 70mL de FL1, dans laquelle du diazote à préalablement bullé, est placé sous une pression

de diazote de 1000psi. La température est alors élevée jusqu'à atteindre 225°C. De telles conditions anaérobiques sont maintenues pendant 5 jours. Aucune augmentation significative de pression n'a pu être mesurée pendant les 5 jours de test comme cela aurait été attendu dans le cas d'une dégradation. Une augmentation du pH de 3 unités est observée. La couleur de la solution reste par ailleurs inchangée. Une analyse par CPV du produit avant et après vieillissement ne montre pas de différence significative (ni disparition ni apparition de pics).

***Evaluation avec le polymère FL1-PC4Si***

Un volume proche de 70mL de FL1-PC4Si, dans laquelle du diazote à préalablement bullé, est placé sous une pression de diazote de 1000psi. La température est alors élevée jusqu'à atteindre 225°C. De telles conditions anaérobiques sont maintenues pendant 5 jours.

Aucune augmentation significative de pression n'a pu être mesurée pendant les 5 jours de test comme cela aurait été attendu dans le cas d'une dégradation. Une diminution du pH de 3 unités est néanmoins observée ainsi qu'un noircissement de la solution. Une analyse par CPV du produit avant et après vieillissement ne montre pas de différence significative (ni disparition ni apparition de pics).

**Exemple 11 : Evaluation de l'effet inhibiteur par le Tube Blocking Test après vieillissement thermique**

Deux solutions salines contenant respectivement des cations métalliques (A2) et l'élément soufre (B2) sont mélangées en proportions égales (voir tableau 5 pour composition chimique des solutions). Le mélange passe ensuite dans un tube dans lequel un dépôt de sels métalliques est susceptible de se former). Le tube est muni d'un filtre sur lequel le dépôt s'installe en priorité rendant difficile la circulation du fluide. La formation d'un dépôt s'accompagne ainsi d'une augmentation de la pression différentielle entre les extrémités du tube. L'inhibiteur est introduit via la solution A2 auquel il est ajouté en concentration variables. Une analyse ultérieure du filtre par les techniques de SEM et EDX permet d'obtenir des informations précises sur la quantité et la nature des dépôts formés.

Le dispositif utilisé est représenté à la Figure 1 annexée.

**Tableau 5 Composition des solutions utilisées pour le Tube Blocking Test**

| *ion* | *Solution A2 (mg/L)* | *Solution B2 (mg/L)* |
|---|---|---|
| Na | 29505 | 29500 |
| Ca | 7223 | 0 |
| Mg | 511 | 0 |
| K | 0 | 0 |
| Ba | 0 | 0 |
| Sr | 0 | 0 |
| $SO_4$ | 0 | 0 |
| Fe | 0 | 0 |
| Pb | 0 | 0 |
| Zn | 200 | 300 |
| S | 0 | 10 |
| $HCO_3$ | 0 | 0 |
| Cl | 55.5 | 45.4 |

L'inhibiteur FL1-PC4Si (ayant subi un vieillissement thermique ou non) est ajouté à la solution A2 en quantités variables de manière à obtenir au final les concentrations du tableau 6. Ces solutions sont alors co-injectées avec la solution B (proportions 50/50 en volume) via un tube en alliage spécifique (Ni72Cr16Fr8) de 1 mm de diamètre extérieur et de 0.8 mm de diamètre intérieur. Une fois intimement mélangées les deux solutions passent au travers d'un filtre d'une porosité de 7 $\mu$m. Les solutions sont injectées avec un débit de 10 ml/min à elles deux. Une mesure de la pression différentielle existant de part et d'autre du filtre est effectuée sur une durée d'une heure. Les tests sont effectués à une température de 125°C et sous une pression de 45 bars. Les résultats obtenus sont rassemblés dans le Tableau 6 ci-dessous.

**Tableau 6**

| ***concentration effective dans le tube (mg/L)*** | ***augmentation de pression sur une heure (psi)*** | ***dépôts observés*** |
|---|---|---|
| | | |
| filtre nu | N/A | aucun |
| | | |
| **FL1-PC4Si non vieilli** | | |
| 0 | 1.6 | grande quantité de ZnS |
| 3 | 0.2 | faible quantité Zns |
| 5 | 0.2 | faible quantité Zns |
| 10 | 0.2 | trace ZnS |
| **FL1-PC4Si vieilli** | | |
| 0 | 1.7 | grande quantité de ZnS |
| 1 | 0.8 | trace ZnS |
| 3 | 0.2 | trace ZnS |
| 5 | 0.2 | trace ZnS |

**Résultats des Tubes blocking tests**

Il ressort de cet exemple que le vieillissement thermique n'a pas affecté l'efficacité de l'inhibiteur de dépôt FL1-PC4Si.

**Exemple 12 : Evaluation de l'effet inhibiteur de carbonate par le Tube Blocking Test des IDOS150 (Bellassol S50) et IDOS150-PC4Si**

Afin de tester le pouvoir d'inhibition des deux formulations un test de blocage a été mis en place. Il consiste à mesurer le temps nécessaire pour qu'un blocage de filtre par dépôt de sels métalliques se produise.
Il ressort de ce test qu'à des concentrations de 1ppm et de 5 ppm les deux formulations remplissent leurs rôles d'inhibiteur. On observe par ailleurs que les deux formulations sont proches en termes d'efficacité.

**Exemple 13 Evaluation de l'absorption/désorption des inhibiteurs Belassol S50 (Water additives) et nanoBellassol S50-PC4Si sur un échantillon de sable**

Il s'agit d'évaluer la capacité des formulations inhibitrices à s'adsorber physiquement ou chimiquement sur la surface minérale du milieu poreux modélisé par un échantillon de sable dans le cas présent. Cette adsorption peut être fonction de plusieurs variables (Concentrations, pH, température, etc...). L'inhibiteur est ensuite libéré par désorption. A l'équilibre, l'adsorption statique $\Gamma$ (mg/g) est représentée par l'équation suivante :

$$\Gamma = \frac{(C_0 - C_{eq})V}{m}$$

Où $C_0$ est la concentration initiale de l'inhibiteur en mg/L. V est le volume de la solution d'inhibiteur en L. $C_{eq}$ est la concentration de l'inhibiteur en équilibre en mg/L et m est la masse du milieu poreux.
Une série d'expériences d'adsorption sur sable avec deux inhibiteurs a été réalisée. Les deux formulations testées sont celle d'IDOS 150 (Belassol S50) décrit en exemple 5 et celle d'IDOS150-PC4Si décrit en exemple 6. Le diamètre moyen en volume mesuré par granulométrie laser est de 210 nm $\pm$ 10 nm. Les résultats obtenus sont donnés par le tableau 7 et la figure 2.

Tableau 7

| IDOS150 | IDOS150-PC4Si | | IDOS150 | | IDOS150-PC4Si | |
|---|---|---|---|---|---|---|
| $C_0$ (mg/L) | $C_0$ (mg/L) IDOS150 | $C_0$ (mg/L) Si | $C_{eq}$(mg/L) | $\Gamma$ (mg/g) | $C_{eq}$ (mg/L) | $\Gamma$ (mg/g) |
| **0** | **0** | **0** | **0** | **0** | 0 | 0 |
| 250 | 250 | 7,5 | 121,5030565 | 0,192745415 | 113,1596752 | 0,205260487 |
| 500 | 500 | 15 | 318,4133682 | 0,272379948 | 279,7862917 | 0,330320563 |
| 12500 | 12500 | 150 | 205,6291528 | 18,44155627 | 1837,862013 | 15,99320698 |
| 25000 | 25000 | 300 | 3470,889381 | 32,29366593 | 830,2890173 | 36,25456647 |

Les résultats indiquent que le nano-inhibiteur IDOS150-PC4Si s'adsorbe et se désorbe sur le sable de la même façon que l'inhibiteur seul IDOS150.

## Exemple 14 : Test de perméation simple

Afin de tester l'affinité des inhibiteurs avec la roche, un test dit de "perméation simple" a été mis au point. Celui-ci consiste à injecter dans une cartouche de roche une solution d'eau de mer synthétique contenant l'inhibiteur en question. Une fois la cartouche remplie de la solution d'inhibiteur, de l'eau de mer seule est injectée et la sortie de l'inhibiteur est suivie. Le schéma du dispositif est donné en figure 5.

La cartouche en question est constituée d'une carotte de roche cylindrique enchâssée dans tube de PVC et lié à celui-ci par une résine epoxy. Les bases sont perforées de part et d'autre de la cartouche permettant à un système de pompe à double seringue d'assurer un flux continu à travers le système à un débit variable.

La présence de l'inhibiteur en sortie est détectée par complexation d'ion terbium libre par celui-ci. Une fois chélatés, la phosphorescence des ions Terbium se trouve fortement exaltée.

La première étape consiste à réaliser la circulation d'eau de mer seule à hauteur d'environ 100 fois le volume poreux de la carotte de roche à travers (300mL/h). Une fois lavée de cette manière, la cartouche est prête à accueillir l'inhibiteur.

Un premier test à été réalisé à l'aide d'une solution de TP8106G à 1% massique en inhibiteur avec ou sans nanoparticules de silice sans gadolinium (il s'agit plus précisément d'une solution A/20 ; voir exemple 16 et 17 pour la synthèse des nanoparticules et la préparation de la formulation d'inhibiteur avec nanoparticules) Les solutions d'inhibiteurs sont injectées sous forme dilué dans de l'eau de mer (solution à 2% massique) : 5 fois le volume poreux de cette solution sont passées à travers la roche (à un débit de 500mL/h). L'injection d'eau de mer seule est alors reprise (300mL/h) jusqu'à ne plus pouvoir détecter l'inhibiteur dans les échantillons prélevés de manière automatique à intervalle de temps réguliers en sortie de carotte. Les résultats sont visibles en figure 4. On observe une rétention plus importante pour la formulation nanoparticulaire de la solution inhibitrice (carrés) que pour la formulation classique (cercles).

Le même constat est établi pour une formulation avec PC4Si ou sans nanoparticules de l'inhibiteur IDOS 150 (figures 3A et 3B).

## Exemple 15 : Test de perméation

Afin de tester l'affinité des différentes formulations d'inhibiteurs avec la roche, un test dit de "perméation" a été mis au point. Le schéma de principe est donné en figure 5. La différence avec le test de perméation simple de l'exemple 14 est une température maintenue ici à 195°C. La perméabilité du dispositif est comprise entre 400 et 700mD. Les résultats de ce test présentés en figure 6 montrent une délivrance plus importante d'inhibiteurs aux temps longs pour la formulation Nano-inhibiteur.

## Exemple 16 : Synthèse de cœurs de silice sans gadolinium

La synthèse de nanoparticules de silice sans gadolinium est réalisée par simple mélange de précurseurs de type organosilanes : le (3-Aminopropyl)triethoxysilane et l'orthosilicate de tétraéthyle (APTES et TEOS) dans l'eau. Le TEOS est ajouté sous forte agitation seul puis après 10 minutes environ l'APTES l'est aussi l'agitation étant maintenue. Les proportions des deux réactifs peuvent être variées. La solution est alors gardée sous agitation pendant une nuit. Aucune étape de purification n'est réalisée par la suite.

La figure 7 donne la signature en diffusion dynamique de la lumière (DLS) des nanoparticules en fin de synthèse

pour des proportions 50/50 en masse d'APTES et de TEOS. La solution A (carrés) est obtenue en ajoutant 5mL de TEOS et 5mL d'APTES à IL d'eau pure. La solution B (cercles) en ajoutant 1mL de TEOS et IL d'APTES à IL d'eau pure. Les tailles moyennes obtenues sont respectivement de 720nm et 190nm.

**Exemple 17 : Préparation de solution de nano-inhibiteurs TP8106G avec nanoparticules sans gadolinium :**

Les solutions A et B obtenues en exemple 16 sont diluées par un facteur de dilution donné et laissées sous agitation pendant une durée comprise entre 1h et 72h. Les solutions ainsi obtenues sont ensuite mélangés en proportions égales par une solution commerciale de TP8106G elle-même diluée par 2. Les solutions finalement obtenues sont laissées sous agitation pendant 24h puis analysées par DLS.

Ainsi le mélange 50/50 en volume de la solution A dilué par 100 et laissé maturé une heure avec la solution de TP8106G diluée par 2 donne une taille moyenne de 249nm après 24h de mélange.

Le mélange 50/50 en volume de la solution B dilué par 10 et laissé maturé une heure avec la solution de TP8106G diluée par 2 donne une taille moyenne de 491nm après 24h de mélange.

## Revendications

1. Nanoparticules **caractérisées en ce qu'**elles comprennent chacune

   (i) une matrice de polyorganosiloxane (POS); éventuellement en enrobage d'un cœur en oxyde de lanthanide,
   (ii) un enrobage à base essentiellement d'inhibiteurs polymériques de dépôts minéraux ou de dépôts soufrés lors de l'extraction de gaz ou de pétrole,

   ledit inhibiteur polymérique de dépôts minéraux étant choisi parmi des polymères ou copolymères contenant au moins une des fonctions suivantes :

   - les polyacides carboxyliques,
   - les polymères d'acide sulfonique,
   - les phosphates ou phosphonates,
   - les acides polyphosphinocarboxyliques,
   - des fonctions amides, et

   ledit inhibiteur polymérique de dépôt soufrés étant un copolymère constitué uniquement d'unités comprenant un motif acide styrène sulfonique, éventuellement neutralisé, et d'unités renfermant un motif acide (poly)carboxylique éventuellement neutralisé ou au moins un motif (poly)amido-amine.

2. Nanoparticules selon la revendication 1, **caractérisées en ce que** la masse des inhibiteurs de dépôts représente plus de 80% de la masse totale de chaque nanoparticule, de préférence plus de 90%.

3. Nanoparticules selon la revendication 1 ou 2, **caractérisées en ce qu'**elles comprennent un inhibiteur polymérique de dépôts d'une masse molaire d'au moins 10 kDa, voire d'au moins 20 kDa, de préférence comprise entre 10 et 50 kDa.

4. Nanoparticules selon l'une des revendications 1 à 3, **caractérisées en ce que** la matrice de polyorganosiloxane comprend au moins 10% (mol/mol) de groupements amine libres par atome de silice et de préférence au moins 30%.

5. Nanoparticules selon l'une au moins des revendications précédentes, **caractérisées en ce qu'**elles comprennent en outre des phosphonates.

6. Nanoparticules selon l'une au moins des revendications précédentes, **caractérisées en ce qu'**elles ont un diamètre moyen inférieur à 1$\mu$m, par exemple compris entre 20 et 500nm, de préférence entre 20 et 200nm.

7. Nanoparticules selon l'une au moins des revendications précédentes, **caractérisées en ce que** la matrice de polyorganosiloxane est fonctionnalisée par des groupements -R, de préférence par covalence à base de liaison silanes Si-R en surface et issus de composés hydrophiles, par exemple choisis parmi: aminopropyl, N-(2-aminoethyl-3-aminopropyl ; Bis(2-hydroxyethyl)-3-Aminopropyl ; N-propyl-N, N, N-trimethylamonium ; N-Propyl-N, N, N-tri-n-butyl ammonium; et 11-amino-undecyl, N-(2-aminoethyl)-11 amino-undecyl.

**8.** Nanoparticules selon l'une au moins des revendications précédentes **caractérisées en ce qu'**elles ne comprennent pas de cœur d'oxyde de lanthanide.

**9.** Nanoparticules selon l'une au moins des revendications précédentes **caractérisées en ce que** les inhibiteurs de dépôts sont reliés à la matrice de polyorganosiloxane par des liaisons électrostatiques non-covalentes.

**10.** Procédé d'obtention des nanoparticules selon l'une au moins des revendications précédentes **caractérisé en ce qu'**il comprend les étapes suivantes :

a éventuellement synthèse d'un cœur à base d'oxyde de lanthanide,
b enrobage des cœurs de l'étape (a) par du polyorganosiloxane (POS) ou préparation d'une nanoparticule de polyorganosiloxane, consistant essentiellement à mettre en œuvre une technique sol/gel d'hydrolyse-condensation d'espèces siliciques et d'alcoxysilanes, en présence d'une base ou d'un acide ;
c surenrobage des nanoparticules obtenues à l'étape (b) consistant essentiellement à mettre en présence ces cœurs enrobés ou nanoparticules de polyorganosiloxane de l'étape (b) avec une solution d'inhibiteurs polymériques de dépôts en présence d'une solvant non aqueux, par exemple les polyéthers, notamment le polyéthylène glycol;
d éventuellement purification des nanoparticules, de préférence par filtration tangentielle, dialyse et/ou par précipitation/ lavage ;
e éventuellement dissolution des cœurs d'oxydes de lanthanides des nanoparticules surenrobées de l'étape (c) consistant essentiellement à les mettre en présence d'un agent modificateur du pH et/ou d'un chélatant apte à complexer tout ou partie des cations lanthanides, de sorte que le diamètre $d_0$ des nanoparticules sans le surenrobage est réduit à une valeur comprise entre 1 et 20 nm, de préférence entre 1 et 10 nm ;

les étapes (c), (d), et (e) pouvant être réalisées dans un ordre différent ou en même temps.

**11.** Suspension de nanoparticules selon l'une au moins des revendications 1 à 9 et/ou obtenues par le procédé selon la revendication 10.

**12.** Liquide d'injection pour inhiber ou ralentir la formation de dépôts soufrés et/ou de minéraux lors de l'exploitation de gaz ou de pétrole, **caractérisé en ce qu'**il comprend des nanoparticules selon l'une au moins des revendications 1 à 9 et/ou, des nanoparticules obtenues par le procédé selon la revendication 10, et/ou la suspension de nanoparticules selon la revendication 11.

**13.** Utilisation de nanoparticules comme définies à l'une des revendications 1 à 9, et/ou obtenues par le procédé selon la revendication 10 et/ou d'une suspension selon la revendication 11, pour inhiber ou ralentir la formation de dépôts soufrés et/ou de minéraux lors de l'extraction de gaz ou de pétrole.

**14.** Utilisation selon la revendication 13, pour inhiber ou ralentir la formation de dépôts soufrés et/ou de minéraux lors de l'extraction dans un puits pétrolier fonctionnant à plus de 10 MPa, par exemple entre 20 et 150 MPa, et entre 150 et 250°C, de préférence entre 200 à 230°C.

**15.** Utilisation selon la revendication 13 ou 14, sous la forme d'une injection desdites nanoparticules en squeeze.

## Patentansprüche

**1.** Nanopartikel, **dadurch gekennzeichnet, dass** sie jeweils Folgendes umfassen

(i) eine Polyorganosiloxan(POS)-Matrix, gegebenenfalls als Beschichtung eines Lanthanidoxid-Kerns;
(ii) eine Beschichtung, die im Wesentlichen auf polymeren Inhibitoren mineralischer Ablagerungen oder schwefelhaltiger Ablagerungen bei der Gas- oder Erdölförderung basiert,

wobei der polymere Inhibitor mineralischer Ablagerungen aus Polymeren oder Copolymeren ausgewählt ist, die mindestens eine der folgenden Funktionen enthalten:

- Polycarbonsäuren,
- Sulfonsäurepolymere,

- Phosphate oder Phosphonate,
- Polyphosphinocarbonsäuren,
- Amidfunktionen, und

wobei der polymere Inhibitor schwefelhaltiger Ablagerungen ein Copolymer ist, das ausschließlich aus Einheiten, die eine gegebenenfalls neutralisierte Styrolsulfonsäuregruppe umfassen, und Einheiten, die eine gegebenenfalls neutralisierte (Poly)Carbonsäuregruppe oder mindestens eine (Poly)Amidoamingruppe enthalten, besteht.

2. Nanopartikel nach Anspruch 1, **dadurch gekennzeichnet, dass** die Masse der Ablagerungsinhibitoren mehr als 80% der Gesamtmasse jedes Nanopartikels, vorzugsweise mehr als 90%, ausmacht.

3. Nanopartikel nach Anspruch 1 oder 2, **dadurch gekennzeichnet, dass** sie einen polymeren Ablagerungsinhibitor mit einer Molmasse von mindestens 10 kDa oder sogar mindestens 20 kDa, vorzugsweise zwischen 10 und 50 kDa, umfassen.

4. Nanopartikel nach einem der Ansprüche 1 bis 3, **dadurch gekennzeichnet, dass** die Polyorganosiloxan-Matrix mindestens 10% (Mol/Mol)freie Amingruppen pro Siliziumatom und vorzugsweise mindestens 30% umfasst.

5. Nanopartikel nach mindestens einem der vorhergehenden Ansprüche, **dadurch gekennzeichnet, dass** sie außerdem Phosphonate umfassen.

6. Nanopartikel nach mindestens einem der vorhergehenden Ansprüche, **dadurch gekennzeichnet, dass** sie einen mittleren Durchmesser von weniger als 1 μm, zum Beispiel zwischen 20 und 500 nm, vorzugsweise zwischen 20 und 200 nm, besitzen.

7. Nanopartikel nach mindestens einem der vorhergehenden Ansprüche, **dadurch gekennzeichnet, dass** die Polyorganosiloxan-Matrix vorzugsweise kovalent auf der Basis von Silanbindungen -Si-R an der Oberfläche mit Gruppen -R funktionalisiert ist, die von hydrophilen Verbindungen stammen, die beispielsweise ausgewählt sind aus: Aminopropyl, N-(2-Aminoethyl-3-aminopropyl, Bis(2-hydroxyethyl)-3-aminopropyl, N-Propyl-N,N,N-trimethylammonium, N-Propyl-N,N,N-tri-n-butylammonium und 11-Aminoundecyl, N-(2-Aminoethyl)-11-aminoundecyl.

8. Nanopartikel nach mindestens einem der vorhergehenden Ansprüche, **dadurch gekennzeichnet, dass** sie keinen Lanthanidoxid-Kern umfassen.

9. Nanopartikel nach mindestens einem der vorhergehenden Ansprüche, **dadurch gekennzeichnet, dass** die Ablagerungsinhibitoren an die Polyorganosiloxan-Matrix durch nicht-kovalente elektrostatische Bindungen gebunden sind.

10. Verfahren zum Erhalten von Nanopartikeln nach mindestens einem der vorhergehenden Ansprüche, **dadurch gekennzeichnet, dass** es die folgenden Schritte umfasst:

a gegebenenfalls Synthese eines Kerns auf der Basis von Lanthanidoxid,
b Beschichten der Kerne von Schritt (a) mit Polyorganosiloxan (POS) oder Herstellung eines Polyorganosiloxan-Nanopartikels, bestehend im Wesentlichen aus dem Einsetzen einer Sol/Gel-Hydrolyse-Kondensations-Technik von Silizium- und Alkoxysilan-Spezies in Gegenwart einer Base oder einer Säure;
c Überschichten der in Schritt (b) erhaltenen Nanopartikel, bestehend im Wesentlichen aus dem Inkontaktbringen dieser beschichteten Kerne oder Polyorganosiloxan-Nanopartikel von Schritt (b) mit einer Lösung polymerer Ablagerungsinhibitoren in Gegenwart eines nicht-wässrigen Lösungsmittels, z. B. von Polyethern, insbesondere Polyethylenglykol;
d gegebenenfalls Reinigung der Nanopartikel, vorzugsweise durch Tangentialflussfiltration, Dialyse und/oder durch Ausfällen/Waschen:
e gegebenenfalls Lösen der Lanthanidoxid-Kerne der überschichteten Nanopartikel von Schritt (c), bestehend im Wesentlichen aus dem Inkontaktbringen mit einem pH-Modifizierungsmittel und/oder einem Chelatisierungsmitel, das alle oder einen Teil der Lanthanidkationen komplexieren kann, so dass der Durchmesser $d_0$ der Nanopartikel ohne die Überschichtung auf einen Wert zwischen 1 und 20 nm, vorzugsweise zwischen 1 und 10 nm, verringert wird;

wobei die Schritte (c), (d) und (e) in einer anderen Reihenfolge oder gleichzeitig durchgeführt werden können.

**11.** Suspension von Nanopartikeln nach mindestens einem der Ansprüche 1 bis 9 und/oder erhalten durch das Verfahren nach Anspruch 10.

**12.** Injektionsflüssigkeit zum Hemmen oder Verlangsamen der Bildung schwefelhaltiger und/oder mineralischer Ablagerungen bei der Gewinnung von Gas oder Erdöl, **dadurch gekennzeichnet, dass** sie Nanopartikel nach mindestens einem der Ansprüche 1 bis 9 und/oder durch das Verfahren nach Anspruch 10 erhaltene Nanopartikel und/oder die Suspension von Nanopartikeln nach Anspruch 11 umfasst.

**13.** Verwendung von Nanopartikeln nach einem der Ansprüche 1 bis 9 und/oder durch das Verfahren nach Anspruch 10 erhaltenen Nanopartikeln und/oder einer Suspension von Nanopartikeln nach Anspruch 11 zum Hemmen oder Verlangsamen der Bildung schwefelhaltiger und/oder mineralischer Ablagerungen bei der Gewinnung von Gas oder Erdöl.

**14.** Verwendung nach Anspruch 13 zum Hemmen oder Verlangsamen der Bildung schwefelhaltiger und/oder mineralischer Ablagerungen bei der Gewinnung in einem Erdölbohrloch, die mit mehr als 10 MPa, zum Beispiel zwischen 20 und 150 MPa und zwischen 150 und 250°C, vorzugsweise zwischen 200 und 230°C betrieben wird.

**15.** Verwendung nach Anspruch 13 oder 14 in Form einer Injektion der Nanopartikel durch Einpressen (Squeeze).

## Claims

**1.** Nanoparticles **characterised in that** they each include

(i) a polyorganosiloxane (POS) matrix; possibly as coating of a lanthanide oxide core,
(ii) a coating with a base mostly of polymeric mineral deposit or sulphur deposit inhibitors during the extraction of gas or oil,

said polymeric mineral deposit inhibitor being chosen from polymers or copolymers containing at least one of the following functions:

- carboxylic polyacids,
- sulphonic acid polymers,
- phosphates or phosphonates,
- polyphosphinocarboxylic acids,
- amide functions, and

said polymeric sulphur deposit inhibitor being a copolymer constituted solely of units that comprise a styrene sulphonic acid unit, optionally neutralised, and units containing a (poly)carboxylic acid unit optionally neutralised or at least one (poly)amido-amine unit.

**2.** Nanoparticles according to claim 1, **characterised in that** the mass of the deposit inhibitors represents more than 80% of the total mass of each nanoparticle, preferably more than 90%.

**3.** Nanoparticles according to claim 1 or 2, **characterised in that** they include a polymeric deposit inhibitor of a molar mass of at least 10 kDa, even of at least 20 kDa, preferably between 10 and 50 kDa.

**4.** Nanoparticles according to one of claims 1 to 3, **characterised in that** the polyorganosiloxane matrix comprises at least 10% (mol/mol) of free amine groups per silica atom and preferably at least 30%.

**5.** Nanoparticles according to at least one of the preceding claims, **characterised in that** they include furthermore phosphonates.

**6.** Nanoparticles according to at least one of the preceding claims, **characterised in that** they have a mean diameter less than 1 $\mu$m, for example between 20 and 500 nm, preferably between 20 and 200 nm.

**7.** Nanoparticles according to at least one of the preceding claims, **characterised in that** the polyorganosiloxane matrix is functionalised by -R groups, preferably by covalence with a base of silanes Si-R bonds at the surface and

from hydrophilic compounds, for example chosen from: aminopropyl, N-(2-aminoethyl-3-aminopropyl; Bis(2-hydroxyethyl)-3-Aminopropyl; N-propyl-N, N, N-trimethylamonium; N-Propyl-N, N, N-tri-n-butyl ammonium; and 11-amino-undecyl, N-(2-aminoethyl)-11 amino-undecyl.

**8.** Nanoparticles according to at least one of the preceding claims **characterised in that** they do not include a lanthanide oxide core.

**9.** Nanoparticles according to at least one of the preceding claims **characterised in that** the deposit inhibitors are connected to the polyorganosiloxane matrix by non-covalent electrostatic connections.

**10.** Method for obtaining nanoparticles according to at least one of the preceding claims **characterised in that** it comprises the following steps:

a. optionally synthesising a core with a lanthanide oxide base,
b. coating the cores of the step (a) with polyorganosiloxane (POS) or preparing a nanoparticle polyorganosiloxane, consisting primarily in implementing a sol/gel technique of hydrolysis-condensation of silicic and alkoxysilane species, in the presence of a base or an acid;
c. overcoating the nanoparticles obtained in step (b) consisting primarily in bringing these coated cores or polyorganosiloxane nanoparticles of the step (b) in contact with a solution of polymeric deposit inhibitors in the presence of a non-aqueous solvent, for example polyethers, in particular polyethylene glycol;
d. optionally purification of the nanoparticles, preferably by tangential filtration, dialysis and/or by precipitation/washing;
e. optionally dissolving the cores of lanthanides oxides of the nanoparticles of the step (b) or overcoated nanoparticles of the step (c) consisting primarily in putting them in the presence of a pH modifying agent and/or of a chelator able to complex all or a portion of the lanthanide cations, in such a way that the diameter of the nanoparticles without the overcoating is reduced to a value between 1 and 20 nm, preferably between 1 and 10 nm;

the steps (c), (d), and (e) are able to be carried out in a different order or at the same time.

**11.** Suspension of nanoparticles according to at least one of the claims 1 to 9 and/or obtained by the method according to claim 10.

**12.** Injection liquid for inhibiting or slowing down the formation of deposits during the exploitation of gas or oil, **characterised in that** it comprises nanoparticles according to at least one of claims 1 to 9 and/or, nanoparticles obtained by the method according to claim 10, and/or the suspension of nanoparticles according to claim 11.

**13.** Use of nanoparticles as defined in one of claims 1 to 9, and/or obtained by the method according to claim 10 and/or a suspension according to claim 11, in order to inhibit or slow down the formation of sulphur and/or mineral deposits during the extraction of gas of oil.

**14.** Use according to claim 13, in order to inhibit or slow down the formation of sulphur and/or mineral deposits during the extraction in an oil or gas well operating at more than 10 MPa, for example between 20 and 150 MPa, and between 150 and 250°C, preferably between 200 to 230°C.

**15.** Use according to claim 13 or 14, in the form of an injection of said nanoparticles in squeeze.

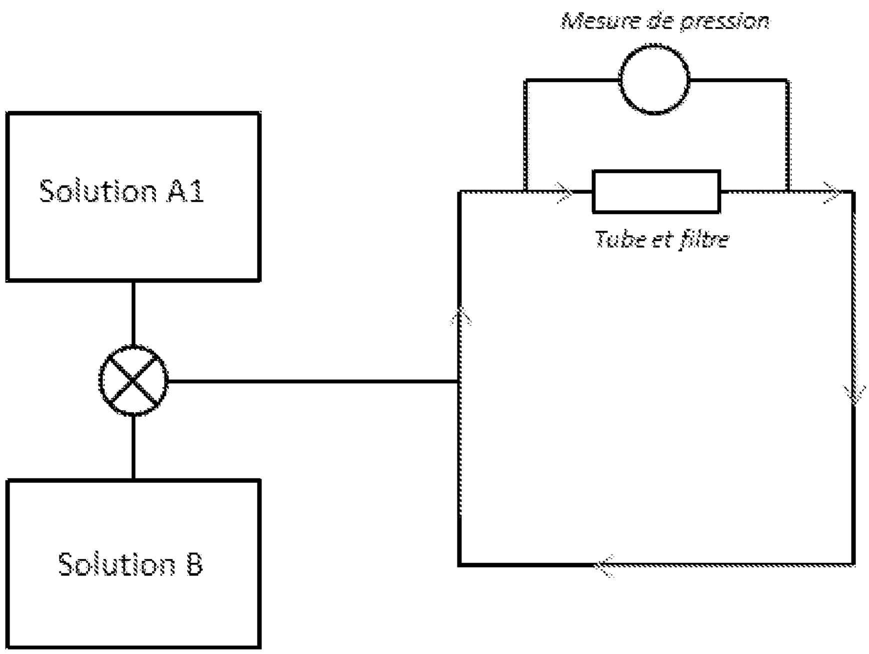


Figure 1

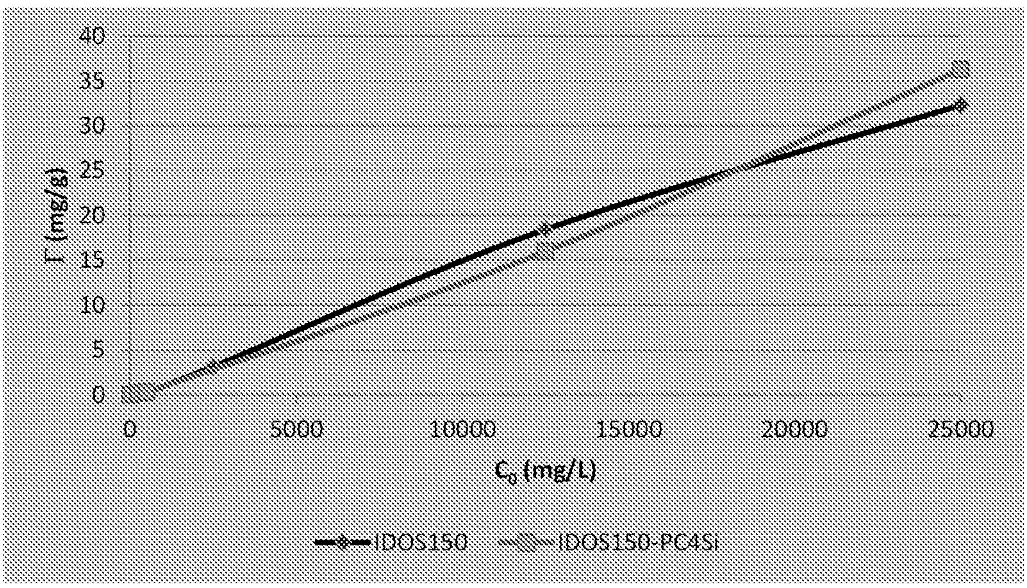


Figure 2

A

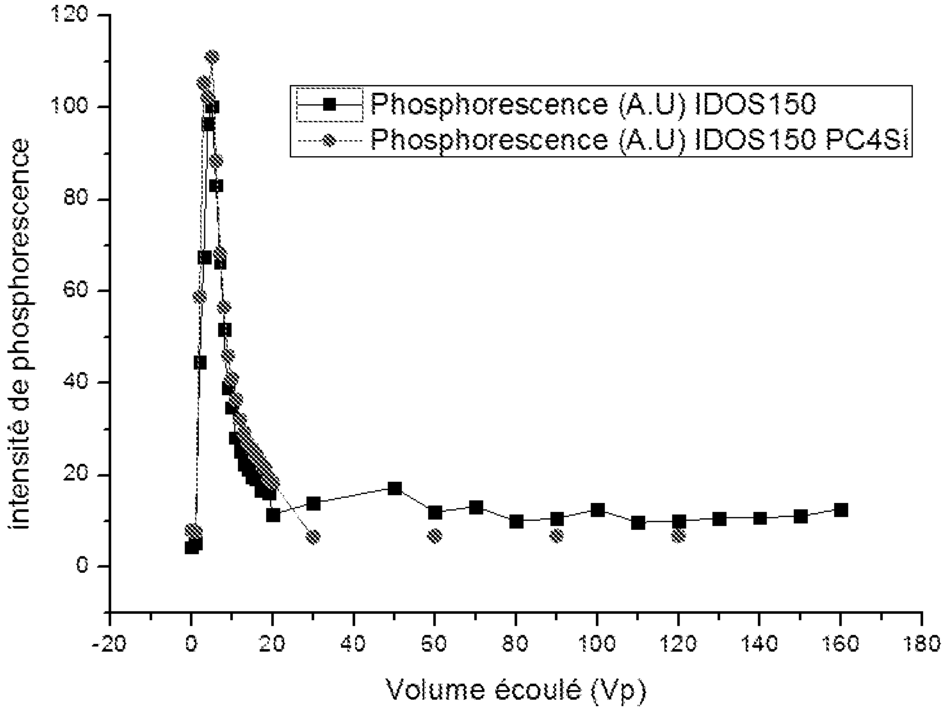
intensité de phosphorescence
Volume écoulé (Vp)
Phosphorescence (A.U) IDOS150
Phosphorescence (A.U) IDOS150 PC4Si

B

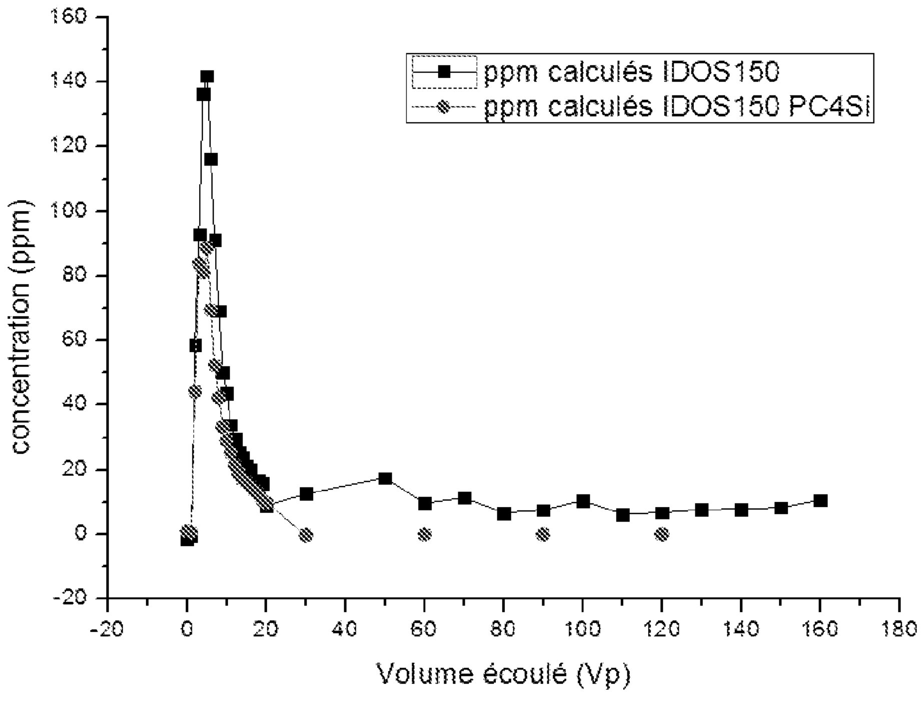
concentration (ppm)
Volume écoulé (Vp)
ppm calculés IDOS150
ppm calculés IDOS150 PC4Si

Figure 3

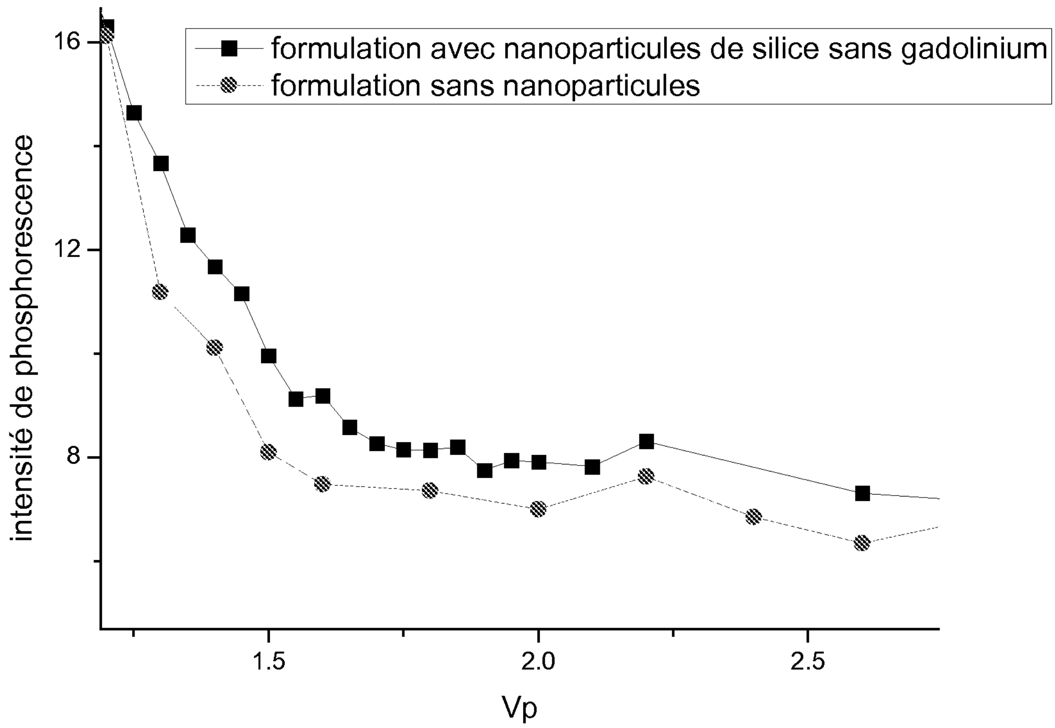


Figure 4

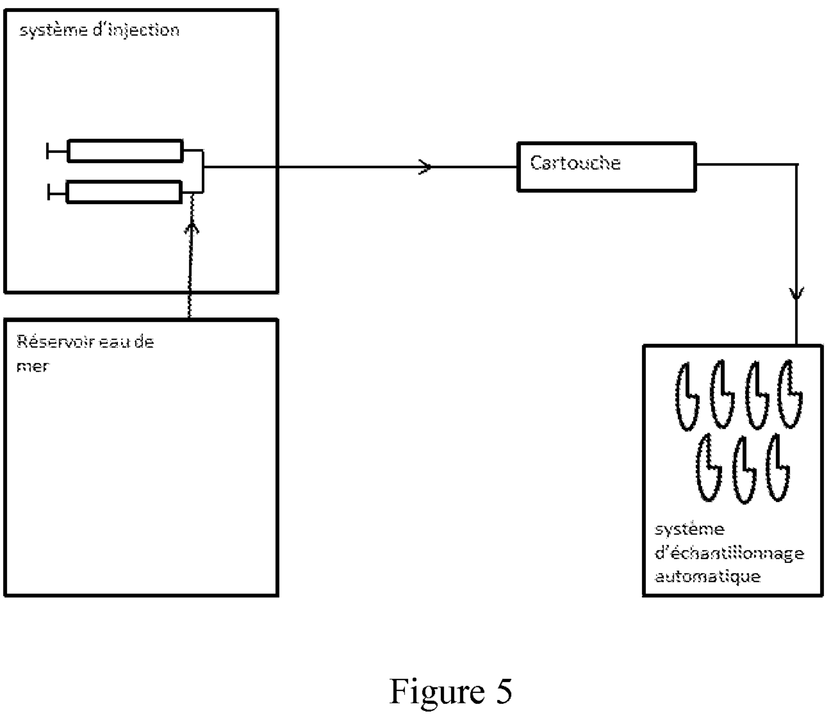


Figure 5

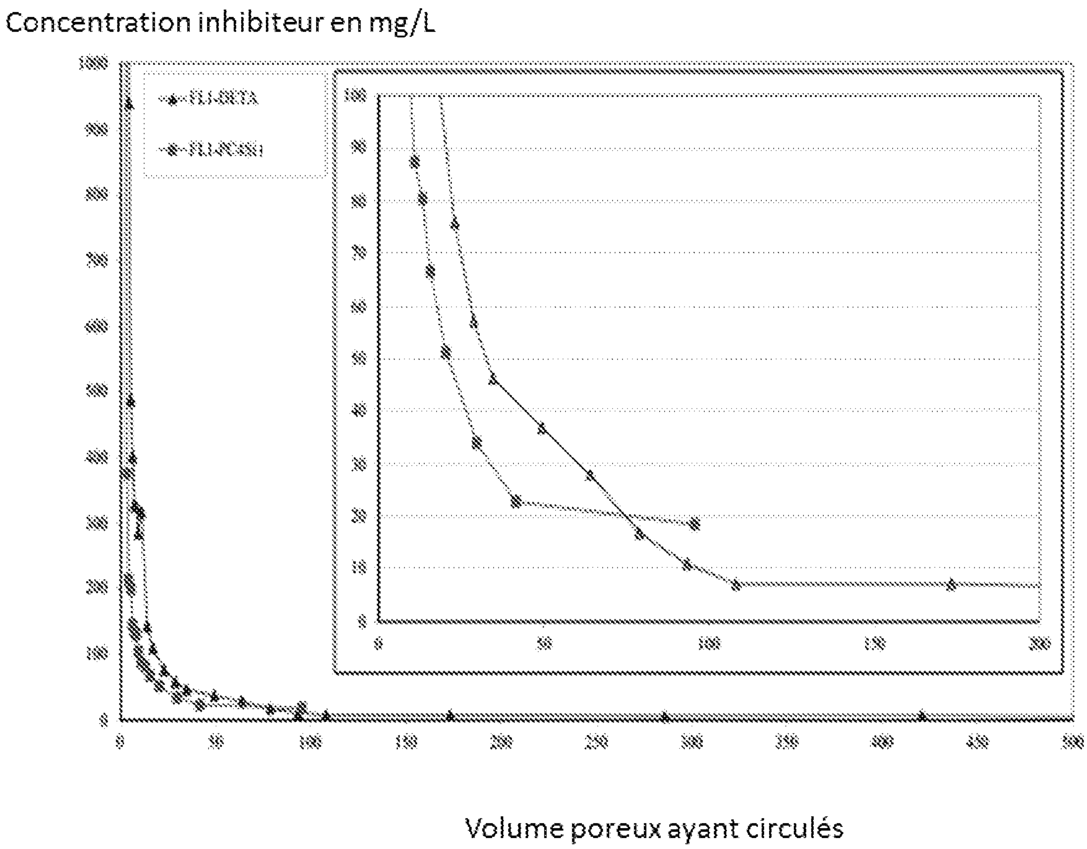


Figure 6

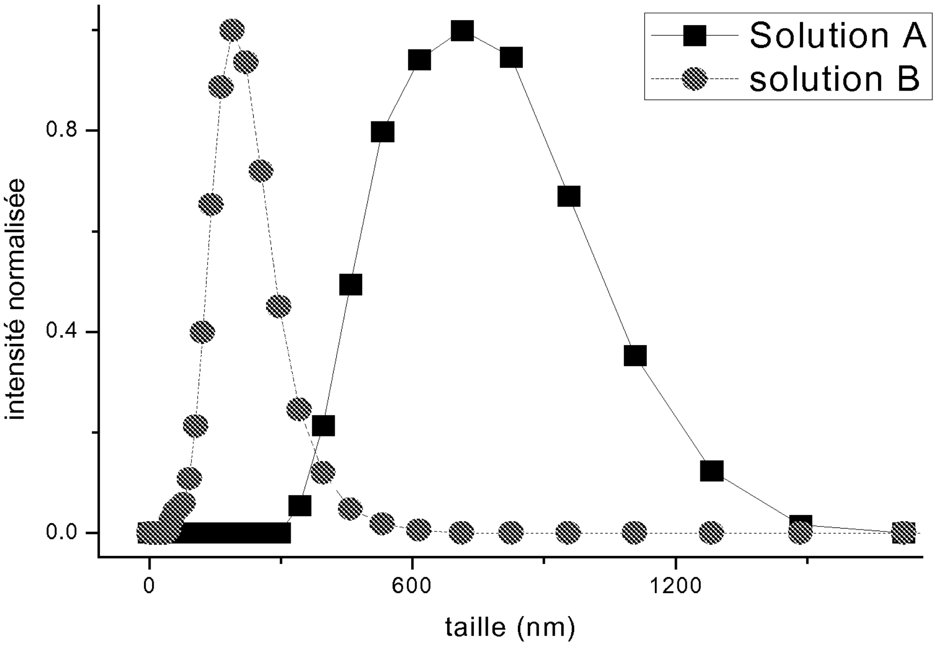


Figure 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- FR 2881787 A1
- WO 2011135101 A


### Littérature non-brevet citée dans la description


- **KAN et al.** *Journal of Colloid and Interface Science,* 2005, vol. 281, 275-284
- **CHAO et al.** *OTC 24252,* 2013
- **ZHANG et al.** *SPE 130639,* 2010
- **GHORBANI et al.** *SPE 156200,* 2012
- **P. PERRIAT et al.** *J. Coll Int. Sci.,* 2004, vol. 273, 191
- **O. TILLEMENT et al.** *J Am Chem Soc,* 2007, vol. 129, 5076
- **P. PERRIAT et al.** *J. Phys. Chem. C,* 2009, vol. 113, 4038
- **C. LOUIS et al.** *Chem Mat.,* 2005, vol. 17, 1673
- **O. TILLEMENT et al.** *J. Am. Chem. Soc.,* 2007, vol. 129, 5076